# FASCICULE DE BREVET EUROPEEN

(11) **EP 3 071 917 B1**
(45) Date de publication et mention de la délivrance du brevet: **31.07.2019**
(21) Numéro de dépôt: 14796002.5
(22) Date de dépôt: 29.10.2014
(51) Int. Cl.: F28F 19/02, C09D 5/38, F28F 21/08

(54) **REVETEMENT POUR ECHANGEUR DE CHALEUR**
WÄRMETAUSCHERBESCHICHTUNG
HEAT EXCHANGER COATING

(30) Priorité: 20.11.2013 FR 1361392
(43) Date de publication de la demande: 28.09.2016
(73) Titulaire: Valeo Systemes Thermiques, 78321 Le Mesnil-Saint-Denis (FR)
(72) Inventeur: CAZENAVE, Christian, F-72210 La Suze-sur-Sarthe (FR); BUSSON, François, F-72220 Saint-Gervais-En-Belin (FR); PHILIPPE, Maryse, F-72210 La Suze-sur-Sarthe (FR); PREVOST, Jean-Christophe, F-72270 Ligron (FR)
(74) Mandataire: Tran, Chi-Hai
(86) Numéro de dépôt international: PCT/EP2014/073189
(87) Numéro de publication internationale: WO 2015/074844

(56) Documents cités:
- WO-A1-2009/113461
- US-A1- 2008 283 228

## Description

La présente invention a pour objet un échangeur de chaleur selon le préambule de la revendication 1, notamment pour circuit de fluide de climatisation d'un véhicule, et plus particulièrement un évaporateur, ainsi qu'un procédé fabrication d'un tel échangeur. Un tel échangeur de chaleur est connu par exemple de US 2008/283228.

Dans les installations de climatisation de véhicules, un évaporateur est balayé par un flux d'air à refroidir. En raison de la température basse des surfaces de l'évaporateur exposées au flux d'air, l'humidité contenue dans ce dernier tend à se déposer sur ces surfaces. L'eau ainsi déposée réduit la section de passage de l'air et empêche un contact direct entre celui-ci et les surfaces métalliques de l'évaporateur, nuisant à la capacité d'échange de chaleur. De plus, des souillures adhèrent sur les surfaces mouillées, favorisant une prolifération microbienne et la production d'odeurs désagréables. La présence des gouttes d'eau provoque également une corrosion des surfaces de l'échangeur conduisant à sa dégradation et sa fragilisation.

Pour remédier à ces inconvénients, on connaît des revêtements contenant des substances destinées à former après séchage sur les surfaces de l'évaporateur une couche adhérente possédant des propriétés hydrophiles, antimicrobiennes et anticorrosives. Ces revêtements sont généralement déposés en plusieurs étapes, en particulier une étape préalable de conversion de surface destinée à permettre un bon accrochage de ladite couche.

Il est également connu, notamment par EP 2045559 et WO 2003/0038471, des liquides de traitement pour recouvrir de telles surfaces qui se déposent en une seule étape directement après l'étape de brasage. En revanche, ces liquides forment après séchage sur lesdites surfaces une couche adhérente possédant seulement des propriétés filmogènes, hydrophiles et antimicrobiennes et sans réelles propriétés anticorrosives.

Pour remédier à ces inconvénients, il existe un besoin d'un revêtement pour les surfaces d'un évaporateur destinées à venir en contact avec un milieu à refroidir qui ait des propriétés anticorrosives, voire hydrophiles et antimicrobiennes et qui se dépose en une seule étape.

L'invention vise, à cet effet, un échangeur de chaleur, en particulier évaporateur pour circuit de climatisation d'un véhicule, ledit échangeur permettant un échange de chaleur entre un premier et un second fluides et présentant des surfaces destinées à venir en contact avec l'un desdits fluides, lesdites surfaces étant formées d'aluminium et/ou d'alliage d'aluminium et revêtues d'une couche d'alumine et d'une couche dite de renfort renforçant la protection naturelle de l'aluminium, ladite couche de renfort comprenant une part de substances organiques et une part de substances minérales, ladite part de substances organiques comprenant au moins un polymère et ladite part de substances minérales comprenant au moins une substance apte à réagir avec l'aluminium pour former un matériau anticorrosion.

Autrement dit, les échangeurs sont d'abord protéger par leur couche naturelle d'alumine. Le revêtement appliqué sur celui-ci permet en outre de rétablir une protection lorsque les surfaces de l'échangeur sont soumises à des attaques et notamment des piqûres de corrosion, en réagissant avec l'aluminium des surfaces avec lequel il est alors mis en contact. De plus sans prétendre être une application précise des phénomènes en cause, le ou les matériaux polymères employés contribuent à la stabilisation du revêtement sur les surfaces, malgré l'absence de prétraitement. Ledit revêtement ou couche de renfort permet de renforcer la protection naturelle de l'aluminium, notamment en régénérant la couche d'alumine. Ce revêtement permet d'améliorer la résistance de l'échangeur à la corrosion

Selon différents modes de réalisation de l'invention, qui pourront être pris ensemble ou séparément :
- ladite couche d'alumine est elle-même revêtue de ladite couche de renfort,
- ladite couche de renfort est revêtue sans préparation préalable de la surface, de type activation ou décapage,
- la ou lesdites substances aptes à réagir avec l'aluminium permettent de combler des irrégularités de surface desdites surfaces et/ou de leur couche d'alumine,
- la ou lesdites substances aptes à réagir avec l'aluminium sont au moins une substance à base de chrome,
- la ou lesdites substances à base de chrome peuvent être des sels de chrome trivalents,
- ladite part de substances organiques et/ou ladite part de substances minérales apportent des propriétés hydrophiles et/ou des propriétés antimicrobiennes à ladite couche de renfort,
- ledit polymère de la part de substances organiques comprend un polymère contenant des fonctions hydroxyles libres, comme l'alcool polyvinylique,
- ladite part de substances organiques comprend un agent liant,
- ledit agent liant est de type acide organique, alcool ou amine et peut réagir avec les fonctions hydroxyles dudit polymère,
- ladite part de substances organiques est comprise entre 50 et 80%, de préférence entre 55 et 65%, en poids,
- ladite part de substances minérales est comprise entre 20 et 50%, de préférence entre 35 et 45%, en poids,
- ladite couche de renfort comprend en outre au moins un inhibiteur de corrosion,
- le ou lesdits inhibiteurs de corrosion reforment la couche d'alumine en cas d'attaque,
- le ou lesdits inhibiteurs de corrosion sont au moins une substance à base de titane,
- la ou lesdites substances à base de titane sont des sels de titane,
- ladite couche de renfort comprend au moins une substance antimicrobienne,
- lesdites substances antimicrobiennes peuvent être des substances organiques tels que le bronopol, le carbendazim, l'isothiazolinone et/ou au moins une substance à base de zinc, tel que le pyrithione de zinc,
- ladite couche de renfort présente une densité surfacique comprise entre 0,5 et 1,5 g/m², de préférence entre 0,8 et 1,2 g/m².
- ledit échangeur comprend une face dont la surface est recouverte d'une couche de renfort d'une épaisseur supérieure à celle recouvrant la face opposée,
- ladite face recouverte d'une épaisseur supérieure est la face est exposée au flux d'air extérieur.

L'invention concerne aussi un procédé de fabrication d'un échangeur, en particulier évaporateur pour circuit de climatisation d'un véhicule, procédé dans lequel on forme ledit échangeur avec des surfaces destinées à venir en contact avec l'un des fluides à refroidir, lesdites surfaces étant formées d'aluminium et/ou d'alliage d'aluminium et revêtues d'une couche d'alumine, et on recouvre ladite couche d'alumine avec un revêtement renforçant la protection naturelle de l'aluminium, ledit revêtement comprenant une part de substances organiques et une part de substances minérales, ladite part de substances organiques comprenant au moins un polymère et ladite part de substances minérales comprenant au moins une substance apte à réagir avec l'aluminium pour former un matériau anticorrosion.

Autrement dit, selon le procédé de l'invention, le revêtement peut être appliqué directement sur les surfaces de l'échangeur sans étape préalable de traitement et/ou de préparation de surface. Encore autrement dit, une seule application de revêtement permet d'apporter une protection contre la corrosion aux surfaces de l'échangeur.

Selon différents modes de réalisation de l'invention, qui pourront être pris ensemble ou séparément :
- on recouvre lesdites surfaces après une étape de brasage de l'échangeur,
- ledit revêtement est appliqué sur lesdites surfaces par pulvérisation et/ou soufflage,
- on souffle sur l'échangeur après avoir recouvert sa surface de revêtement, avant séchage, de manière à moduler l'épaisseur de revêtement présent sur deux des faces opposées de l'échangeur,
- on fait sécher ledit revêtement,
- on fait sécher ledit revêtement lors d'une étape de chauffage entre 130 et 180 °C, de préférence à 150 °C,
- ladite étape de chauffage dure 1 à 10 min, de préférence elle dure 5 min.
- ledit revêtement est appliqué de façon à ce que la quantité de revêtement appliquée sur la surface externe dudit échangeur soit comprise entre 15 et 20 mL/m²,
- le pH dudit revêtement est choisi entre 1,5 et 5, de préférence entre 2 et 3,5
- ledit revêtement comprend une portion réduite de fluorure, inférieure à 1000 ppm.

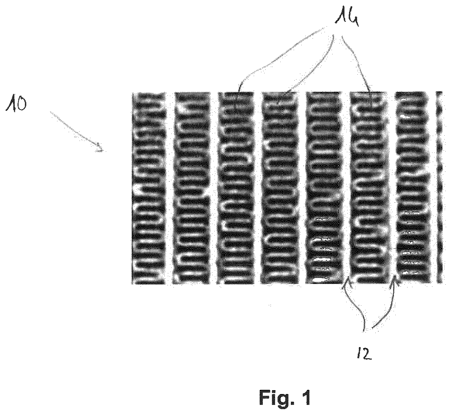

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence à la figure 1 annexée qui est une vue d'une partie d'un échangeur de chaleur selon l'invention.

La figure 1 représente de façon générale une partie d'échangeur de chaleur permettant un échange de chaleur entre un premier et un second fluide. Il peut s'agir par exemple d'un évaporateur pour un circuit de climatisation de véhicule. Dans ce cas, un des deux fluides est un flux d'air à refroidir et/ou l'autre fluide, un fluide frigorigène. Notamment, il s'agit dans cet exemple, d'un évaporateur brasé en aluminium ou en alliage d'aluminium.

Ledit échangeur est formé ici d'un faisceau 10 comprenant des conduits 12 de circulation du fluide frigorigène. Lesdits conduits 12 sont formés, par exemple, de tubes, reliés à un ou des collecteurs, et/ou de paires de plaques empilées, communiquant entre-elles. Entre les tubes et/ou paires de plaques, on peut prévoir des perturbateurs 14, notamment des intercalaires de forme ondulée. Ces intercalaires 14 perturbent la circulation du flux d'air et augmentent la surface d'échange. L'échange de chaleur entre le flux d'air et le fluide frigorigène est ainsi amélioré. Ces intercalaires 14 sont en contact avec les tubes et/ou les paires de plaques, notamment par les sommets de leurs plis.

Ledit échangeur présente des surfaces destinées à venir en contact avec l'un desdits fluides, notamment le flux d'air à refroidir, en particulier les parois desdits tubes, paires de plaques et/ou intercalaires.

Selon l'invention, lesdites surfaces sont formées d'aluminium et/ou d'alliage d'aluminium. Elles sont revêtues d'une couche d'alumine et d'une couche dite de renfort renforçant la protection naturelle de l'aluminium. Cette couche de renfort comprend une part de substances organiques comprenant au moins un polymère et une part de substances minérales comprenant au moins une substance apte à réagir avec l'aluminium pour former un matériau anticorrosion. Ladite couche de renfort constitue avantageusement un revêtement de ladite couche d'alumine.

La présence des substances minérales aptes à réagir avec l'aluminium permet de pallier des attaques de la couche d'alumine, voire de régénérer ladite couche d'alumine. On reforme ainsi une couche de protection et on limite les conséquences des attaques de corrosion des surfaces de l'échangeur. En réagissant avec l'aluminium, lesdites substances pourront permettre également de combler des irrégularités de surface desdites surfaces et/ou de leur couche d'alumine.

Les substances organiques et/ou les substances minérales dans le revêtement pourront en outre apporter des propriétés hydrophiles et/ou antimicrobiennes aux surfaces de l'échangeur. Ainsi, les gouttes d'eau s'aplatissent sous la forme d'un film qui est plus facile à drainer et évite la projection d'eau provoqué par le retrait de gouttes d'eau.

Lesdites substances sont de façon avantageuse des substances connues pour fixer les molécules d'oxygène. Lesdites substances sont de préférences des substances à base de chrome, en particulier des sels de chrome trivalents.

Ce mécanisme peut être amélioré en étant en milieu acide, notamment à un pH compris entre 1,5 et 5, de préférence entre 2 et 3,5. Ce pH peut être obtenu par l'ajout d'acides, en particulier des acides organiques qui pourront par ailleurs être des agents liants susceptibles de réagir avec le ou les polymères de la part de substances organiques. Ledit polymère comprend, par exemple, un polymère hydroxylé, de type alcool vinylique. Le mécanisme est également amélioré si le revêtement comprend une faible portion de fluorure, inférieure à 1000 ppm.

Les propriétés anti-corrosions apportées par les substances aptes à réagir avec l'aluminium peuvent être renforcées par l'ajout d'un ou plusieurs inhibiteurs de corrosion dans ladite couche de renfort. Il peut s'agir de substances à base de titane, notamment des sels de titane. Ces inhibiteurs de corrosions peuvent être des substances fixant l'oxygène.

De même pour améliorer les propriétés antimicrobiennes, ladite couche de renfort peut comprendre une ou plusieurs substances antimicrobiennes. Ces substances peuvent être choisies parmi le bronopol, le carbendazim, l'isothiazolinone et les substances à base de zinc, tel que le pyrithione de zinc. Dans le cas d'un revêtement à pH entre 1,5 et 5, la ou les substances antimicrobiennes doivent être résistantes aux milieux acides.

Un tel échangeur de chaleur peut être obtenu, par exemple, par le procédé de l'invention.

Dans une première étape, on forme ledit échangeur avec des surfaces destinées à venir en contact avec l'un des fluides à refroidir et lesdites surfaces sont formées d'aluminium et/ou d'alliage d'aluminium et revêtues d'une couche d'alumine. De préférence l'échangeur est obtenu par une étape de brasage.

Dans une seconde étape, on recouvre ladite couche d'alumine avec un revêtement renforçant la protection naturelle de l'aluminium. Ledit revêtement comprend une part de substances organiques comprenant au moins un polymère et une part de substances minérales comprenant au moins une substance aptes à réagir avec l'aluminium pour former un matériau anticorrosion. Selon l'invention, le revêtement est appliqué directement après l'étape de brasage sans étape supplémentaire, tel qu'un traitement de surface de type activation ou décapage, ou la préparation pour un procédé conventionnel d'immersion - obturation du circuit interne, insertion dans un outillage pour l'immersion dans un bain.

Cette étape permet de former une couche régénérant et/ou renforçant la protection naturelle de l'aluminium, avantageusement en régénérant la couche d'alumine.

Comme décrit précédemment, le pH du revêtement est compris de préférence entre 1,5 et 5 et de façon optimisée entre 2 et 3,5 pour obtenir une bonne régénération de la couche d'alumine et une bonne protection des surfaces de l'échangeur par la couche de renfort.

Le revêtement est généralement appliqué sur l'échangeur de façon uniforme, par exemple par pulvérisation et/ou par soufflage. De préférence, la quantité appliquée est comprise entre 15 et 20 mL/m².

L'étape de recouvrement peut être suivie par une étape dans laquelle on souffle sur l'échangeur. Cette étape permet de moduler l'épaisseur de revêtement présent sur deux des faces opposées de l'échangeur. De manière générale, l'épaisseur du revêtement sur la face opposée à la pulvérisation et au soufflage est légèrement plus importante. De préférence, cette face est la face exposée au flux d'air car cette surépaisseur conduit à améliorer la résistance à la corrosion de l'échangeur. De manière avantageuse, cette étape a lieu avant l'étape de séchage.

Ces étapes sont suivies par une étape dans laquelle on fait sécher le revêtement. Cette étape de séchage permet notamment la formation de la couche de renfort. En effet, cette étape permet la polymérisation du ou des polymères présents dans la part de substances organiques du revêtement. La polymérisation peut être renforcée par la réticulation des polymères, en particulier si des agents de réticulation sont ajoutés au revêtement. Les agents de réticulation peuvent être de type acide organique, époxy ou acrylique, choisis pour réagir avec les fonctions hydroxyles libres du polymère.

Le séchage et la polymérisation peuvent également être renforcés de façon avantageuse, si on fait sécher ledit revêtement lors d'une étape de chauffage entre 130 et 180 °C, de préférence à 150 °C. Ladite étape de chauffage dure 1 à 10 min, de préférence elle dure 5 min.

Un exemple de couche de renfort qui a permis d'obtenir un échangeur ayant des qualités hydrophile, antibactérienne et anticorrosion satisfaisantes comprend 60% de substances organiques et 40% de substances minérales, dont 30 % de substances à base de chrome. Le polymère compris dans la part de substances organiques est notamment un polymère d'alcool vinylique. Cette couche présente une densité surfacique comprise entre 0,8 et 1,2 g/m² et une surépaisseur de 20 % sur la face exposée au flux d'air obtenue par exemple par l'étape de soufflage décrite précédemment.

Des tests comparatifs ont été réalisés entre un tel échangeur et un échangeur de l'art antérieur.

Il a ainsi été montré qu'un tel échangeur avait des résultats équivalents concernant ses qualités hydrophile, antimicrobienne et anti-odeur par rapport à un échangeur de l'art antérieur connu pour ces mêmes qualités.

En outre, la résistance à la corrosion est largement améliorée grâce à la présence de la couche de renfort. Des tests de corrosion ont permis de mettre en évidence que :
- les signes d'attaque de corrosion de la surface en aluminium étaient retardés de plus de soixante jours sur un échangeur selon l'invention ;
- la profondeur des piqûres de corrosion sur la surface d'un échangeur selon l'invention était stable après 90 jours en contact avec une solution corrosive dans une chambre de corrosion, alors que la profondeur des piqûres de corrosion sur la surface d'un échangeur de l'art antérieur avait augmenté ;
- la défaillance de l'échangeur selon l'invention est obtenue environ cinquante jours après celle de l'échangeur de l'art antérieur.

Il est à noter que des variantes de réalisation sont bien sûr possibles et que la présente invention ne se limite pas à un évaporateur pour climatisation de véhicule. Notamment, il est possible d'étendre la présente invention à d'autres types d'échangeur de chaleur, et à d'autres domaines.

## Revendications

1. Echangeur de chaleur, en particulier évaporateur pour circuit de climatisation d'un véhicule, ledit échangeur permettant un échange de chaleur entre un premier et un second fluides et présentant des surfaces destinées à venir en contact avec l'un desdits fluides, lesdites surfaces étant formées d'aluminium et/ou d'alliage d'aluminium et revêtues d'une couche d'alumine et d'une couche dite de renfort renforçant la protection naturelle de l'aluminium, **caractérisé en ce que** ladite couche de renfort comprend une part de substances organiques et une part de substances minérales, ladite part de substances organiques comprenant au moins un polymère et ladite part de substances minérales comprenant au moins une substance apte à réagir avec l'aluminium pour former un matériau anticorrosion.

2. Echangeur selon la revendication précédente, dans lequel la ou lesdites substances aptes à réagir avec l'aluminium permettent de régénérer l'alumine.

3. Echangeur selon l'une quelconque des revendications précédentes, dans lequel la ou lesdites substances aptes à réagir avec l'aluminium permettent de combler des irrégularités de surface desdites surfaces et/ou de leur couche d'alumine.

4. Echangeur selon l'une quelconque des revendications précédentes, dans lequel la ou lesdites substances aptes à réagir avec l'aluminium sont au moins une substance à base de chrome ou à base de fluorure.

5. Echangeur selon l'une quelconque des revendications précédentes, dans lequel ladite part de substances organiques et/ou ladite part de substances minérales apportent des propriétés hydrophiles et/ou des propriétés antimicrobiennes à ladite couche de renfort.

6. Echangeur selon la revendication précédente, dans lequel ladite part de substances organiques est comprise entre 50 et 80%.

7. Echangeur selon la revendication précédente, dans lequel ladite part de substances minérales est comprise entre 20 et 50%.

8. Echangeur selon l'une quelconque des revendications précédentes, dans lequel ladite couche de renfort comprend en outre au moins un inhibiteur de corrosion.

9. Echangeur selon l'une quelconque des revendications précédentes, dans lequel ladite couche de renfort comprend en outre au moins une substance antimicrobienne.

10. Echangeur selon l'une quelconque des revendications précédentes, dans lequel ladite couche de renfort présente une densité surfacique comprise entre 0,5 et 1,5 g/m².

11. Echangeur selon l'une quelconque des revendications précédentes, dans lequel ledit échangeur comprend une face dont la surface est recouverte d'une couche de renfort d'une épaisseur supérieure à celle recouvrant la face opposée.

12. Procédé de fabrication d'un échangeur, en particulier évaporateur pour circuit de climatisation d'un véhicule, procédé dans lequel on forme ledit échangeur avec des surfaces destinées à venir en contact avec l'un des fluides à refroidir, lesdites surfaces étant formées d'aluminium et/ou d'alliage d'aluminium et revêtues d'une couche d'alumine, et on recouvre ladite couche d'alumine avec un revêtement renforçant la protection naturelle de l'aluminium, **caractérisé en ce que** ledit revêtement comprend une part de substances organiques et une part de substances minérales, ladite part de substances organiques comprenant au moins un polymère et ladite part de substances minérales comprenant au moins une substance apte à réagir avec l'aluminium pour former un matériau anticorrosion.

13. Procédé selon la revendication précédente, dans lequel on fait sécher ledit revêtement.

14. Procédé selon l'une quelconque des revendications 12 ou 13, dans lequel le pH dudit revêtement est choisi entre 1,5 et 5.

15. Procédé selon l'une quelconque des revendications 12 à 14, dans lequel le revêtement comprend une portion réduite de fluorure, inférieure à 1000 ppm.

16. Procédé selon l'une quelconque des revendications 12 à 15, dans lequel ledit revêtement est appliqué de façon à ce que la quantité de revêtement appliquée sur la surface externe dudit échangeur soit comprise entre 15 et 20 mL/m².

## Patentansprüche

1. Wärmetauscher, insbesondere Verdampfer für eine Klimaanlage eines Fahrzeugs, wobei der Wärmetauscher einen Wärmeaustausch zwischen einem ersten und einem zweiten Fluid ermöglicht und Flächen aufweist, die dazu bestimmt sind, mit einem der Fluide in Kontakt zu kommen, wobei die Flächen von Aluminium und/oder Aluminiumlegierung gebildet und mit einer Aluminiumoxidschicht und einer so genannten Verstärkungsschicht, die den natürlichen Schutz des Aluminiums verstärkt, beschichtet sind, **dadurch gekennzeichnet, dass** die Verstärkungsschicht einen Anteil an organischen Substanzen und einen Anteil an mineralischen Substanzen umfasst, wobei der Anteil an organischen Substanzen mindestens ein Polymer umfasst, und der Anteil an mineralischen Substanzen mindestens eine Substanz umfasst, die geeignet ist, mit dem Aluminium zu reagieren, um ein Korrosionsschutzmaterial zu bilden.

2. Wärmetauscher nach dem vorhergehenden Anspruch, bei dem es die Substanz (en), die geeignet ist(sind), mit dem Aluminium zu reagieren, ermöglicht(en), das Aluminiumoxid zu regenerieren.

3. Wärmetauscher nach einem der vorhergehenden Ansprüche, bei dem es die Substanz (en), die geeignet ist(sind), mit dem Aluminium zu reagieren, ermöglicht(en), Oberflächenunregelmäßigkeiten der Oberflächen und/oder ihrer Aluminiumoxidschicht auszugleichen.

4. Wärmetauscher nach einem der vorhergehenden Ansprüche, bei dem die Substanz (en), die geeignet ist(sind), mit dem Aluminium zu reagieren, mindestens eine Substanz auf Basis von Chrom oder auf Basis von Fluorid ist(sind).

5. Wärmetauscher nach einem der vorhergehenden Ansprüche, bei dem der Anteil an organischen Substanzen und/oder der Anteil an mineralischen Substanzen der Verstärkungsschicht hydrophile Eigenschaften und/oder antimikrobielle Eigenschaften verleihen.

6. Wärmetauscher nach dem vorhergehenden Anspruch, bei dem der Anteil an organischen Substanzen zwischen 50 und 80 % beträgt.

7. Wärmetauscher nach dem vorhergehenden Anspruch, bei dem der Anteil an mineralischen Substanzen zwischen 20 und 50 % beträgt.

8. Wärmetauscher nach einem der vorhergehenden Ansprüche, bei dem die Verstärkungsschicht ferner mindestens ein Korrosionsschutzmittel umfasst.

9. Wärmetauscher nach einem der vorhergehenden Ansprüche, bei dem die Verstärkungsschicht ferner mindestens eine antimikrobielle Substanz umfasst.

10. Wärmetauscher nach einem der vorhergehenden Ansprüche, bei dem die Verstärkungsschicht eine Flächendichte zwischen 0,5 und 1,5 g/m² aufweist.

11. Wärmetauscher nach einem der vorhergehenden Ansprüche, wobei der Wärmetauscher eine Seite umfasst, deren Oberfläche mit einer Verstärkungsschicht mit einer größeren Dicke als jene, die die gegenüberliegende Seite bedeckt, bedeckt ist.

12. Verfahren zur Herstellung eines Wärmetauschers, insbesondere eines Verdampfers für eine Klimaanlage eines Fahrzeugs, wobei bei dem Verfahren der Wärmetauscher mit Flächen gebildet wird, die dazu bestimmt sind, mit einem der zu kühlenden Fluide in Kontakt zu kommen, wobei die Flächen von Aluminium und/oder Aluminiumlegierung gebildet und mit einer Aluminiumoxidschicht beschichtet sind, und die Aluminiumoxidschicht mit einer Beschichtung, die den natürlichen Schutz des Aluminiums verstärkt, bedeckt wird, **dadurch gekennzeichnet, dass** die Beschichtung einen Anteil an organischen Substanzen und einen Anteil an mineralischen Substanzen umfasst, wobei der Anteil an organischen Substanzen mindestens ein Polymer umfasst, und der Anteil an mineralischen Substanzen mindestens eine Substanz umfasst, die geeignet ist, mit dem Aluminium zu reagieren, um ein Korrosionsschutzmaterial zu bilden.

13. Verfahren nach dem vorhergehenden Anspruch, bei dem die Beschichtung trocknen gelassen wird.

14. Verfahren nach einem der Ansprüche 12 oder 13, bei dem der pH-Wert der Beschichtung zwischen 1,5 und 5 gewählt ist.

15. Verfahren nach einem der Ansprüche 12 bis 14, bei dem die Beschichtung einen reduzierten Fluoridanteil von weniger als 1000 ppm umfasst.

16. Verfahren nach einem der Ansprüche 12 bis 15, bei dem die Beschichtung derart aufgebracht wird, dass die auf die Außenfläche des Wärmetauschers aufgebrachte Beschichtungsmenge zwischen 15 und 20 mL/m² beträgt.

## Claims

1. Heat exchanger, in particular an evaporator for an air-conditioning circuit of a vehicle, said exchanger enabling a heat exchange between a first fluid and a second fluid and having surfaces intended to come into contact with one of said fluids, said surfaces being formed from aluminum and/or from aluminum alloy and coated with an alumina layer and with a layer referred to as a reinforcing layer that reinforces the natural protection of the aluminum, **characterized in that** said reinforcing layer comprises a portion of organic substances and a portion of mineral substances, said portion of organic substances comprising at least one polymer and said portion of mineral substances comprising at least one substance capable of reacting with the aluminum in order to form an anticorrosion material.

2. Exchanger according to the preceding claim, wherein said substance(s) capable of reacting with the aluminum make it possible to regenerate the alumina.

3. Exchanger according to either one of the preceding claims, wherein said substance(s) capable of reacting with the aluminum make it possible to fill in surface irregularities of said surfaces and/or of the alumina layer thereof.

4. Exchanger according to any one of the preceding claims, wherein said substance(s) capable of reacting with the aluminum are at least one chromium-based or fluoride-based substance.

5. Exchanger according to any one of the preceding claims, wherein said portion of organic substances and/or said portion of mineral substances provide said reinforcing layer with hydrophilic properties and/or antimicrobial properties.

6. Exchanger according to the preceding claim, wherein said portion of organic substances is between 50% and 80%.

7. Exchanger according to the preceding claim, wherein said portion of mineral substances is between 20% and 50%.

8. Exchanger according to any one of the preceding claims, wherein said reinforcing layer additionally comprises at least one corrosion inhibitor.

9. Exchanger according to any one of the preceding claims, wherein said reinforcing layer additionally comprises at least one antimicrobial substance.

10. Exchanger according to any one of the preceding claims, wherein said reinforcing layer has a surface density of between 0.5 and 1.5 g/m².

11. Exchanger according to any one of the preceding claims, wherein said exchanger comprises one face, the surface of which is covered with a reinforcing layer having a thickness greater than that covering the opposite face.

12. Process for manufacturing an exchanger, in particular an evaporator for an air-conditioning circuit of a vehicle, process wherein said exchanger is formed with surfaces intended to come into contact with one of the fluids to be cooled, said surfaces being formed from aluminum and/or from aluminum alloy and coated with an alumina layer, and said alumina layer is covered with a coating that reinforces the natural protection of the aluminum, **characterized in that** said coating comprises a portion of organic substances and a portion of mineral substances, said portion of organic substances comprising at least one polymer and said portion of mineral substances comprising at least one substance capable of reacting with the aluminum in order to form an anticorrosion material.

13. Process according to the preceding claim, wherein said coating is dried.

14. Process according to either one of Claims 12 and 13, wherein the pH of said coating is chosen from between 1.5 and 5.

15. Process according to any one of Claims 12 to 14, wherein the coating comprises a reduced portion of fluoride, of less than 1000 ppm.

16. Process according to any one of Claims 12 to 15, wherein said coating is applied so that the amount of coating applied to the outer surface of said exchanger is between 15 and 20 ml/m².
